# EUROPEAN PATENT SPECIFICATION

(11) **EP 1 537 480 B1**
(45) Date of publication and mention of the grant of the patent: **12.01.2011**
(21) Application number: 03794004.6
(22) Date of filing: 01.09.2003
(51) Int. Cl.: G06F 9/30, G06F 9/46

(54) **METHOD AND APPARATUS FOR HANDLING NESTED INTERRUPTS**
VORRICHTUNG UND VERFAHREN ZUR VERARBEITUNG VON GESCHACHTELTEN UNTERBRECHUNGEN
PRISE EN CHARGE PAR LA MEMOIRE TAMPON DYNAMIQUE SELECTIVE DES INTERRUPTIONS IMBRIQUEES

(30) Priority: 03.09.2002 EP 02078613
(43) Date of publication of application: 08.06.2005
(73) Proprietor: Silicon Hive B.V., 5656 AG Eindhoven (NL)
(72) Inventor: LEIJTEN, Jeroen, A., J., NL-5656 AA Eindhoven (NL)
(74) Representative: Hatzmann, Martin
(86) International application number: PCT/IB2003/003855
(87) International publication number: WO 2004/023314

(56) References cited:
- EP-A- 0 272 150
- EP-A- 0 441 054
- EP-A- 1 115 060
- WO-A-02/33570
- US-A- 3 781 810
- US-A- 4 730 248

## Description

Title Patent Application: A data processor with a functional unit, a register file, a data memory and a snapshot buffer which during interrupt handling saves processor state informations in a snapshot buffer, and at a subsequent interrupt during handling of an actual interrupt saves the snapshot buffer content in a data memory facility with a multibit access port facility, a data processing facility with such data processor embedded, and a method for operating such data processor that is arranged for handling nested interrupts.

### BACKGROUND OF THE INVENTION

The invention relates to a data processor comprising one or more functional units, one or more register files, a data memory, and moreover a snapshot buffer that accommodates to store state informations of the processor during an interrupt condition in respective buffer elements as has furthermore been recited in the preamble of Claim 1. For being able to obtain high-quality operation schedules in VLIW and other state of the art processors, ideally all hardware characteristics that are relevant to the compiler should be visible to the compiler. Although not being limited thereto, a particular relevant category of such informations pertains to the various latencies of respectively associated operations. High performance pipelined processors use latency values that are in excess of one, to thereby raise performance. In operation, the latency values should be exactly specified. This implies that not only the total duration of the operation will be specified, but also the precise instants should be known at which specific operations will occupy specific hardware for the consuming of operands, the processing of data, and the production of results. Thereby, superior schedules with minimum register pressure can be obtained.

The above scheduling approach is called NUAL-EQ semantics (Non Unit Assumed Latency with Equal). Always interruptible programmable processors that support compile-time scheduling based on NUAL-EQ semantics require that an exact snapshot be taken from the internal processor pipeline that should be restored as part of the interrupt handling scheme. In fact, the procedure that has been more commonly in use, and which flushes the processor pipeline state could subsequently lead to an incorrect behaviour of the processor. Such a snapshot will be stored in a snapshot buffer as has been disclosed in published PCT Patent application WO 02/33570 A2, assigned to the present assignee and co-invented by the present inventor.

WO 02/33570 A2 discloses a digital signal processing apparatus supporting both a first instruction set which has access to all available hardware resources (and is therefore a normal instruction set), as well as a second instruction set which has access to only a limited subset of hardware resources (and therefore can also be called compact instruction set). So it discloses a digital signal processing apparatus with a dual instruction set, wherein one of the instruction sets, namely the compact second instruction set, only requires a small subset of all hardware resources. In this way it is possible to reduce the amount of state which must be saved upon an interrupt. If in light-weight interrupt service routines only the compact second instruction set is used, it is sufficient to save the state of only the limited subset of the hardware resources used by the compact second instruction set, while simply freezing the state in all other resources. This can save a lot of time during context switches. So, the compact view of the hardware resources can also be used to reduce the overhead of context switching in case of an interrupt.

US 4,730,248 discloses a data processing apparatus having a subroutine processing function which saves and resumes the contents of general registers at the time of shifting into a subroutine or at the time of resume processing. Three layers of general registers arc provided, each layer being comprised of a group of registers of a plurality of stages. The layers arc connected in the form of a ring while coupling the corresponding registers of neighboring layers for each bit, so that the data can be batchwisely transferred in both directions. When shifted into a subroutine, the contents of a group of registers of the layer that had been used before the shifting are batchwisely transferred to a group of registers of a neighboring layer. The subroutine to which the operation is shifted uses the layer to which the data arc transferred.

Now, the present inventor has duly recognized the relevance of so-called ***nested interrupts,*** wherein the handling of a previous interrupt condition has not been completed when a subsequent interrupt will occur. In such case there must be a possibility to save and restore multiple and simultaneous snapshots. Although there would in principle exist various different approaches to solve this problem, the least expensive one is to allow the snapshot buffer to be written and read by a load/store controller unit, in such way that the latest snapshot that had been taken at the start of the handling of the current interrupt, can be stored in a background memory to make place for a new snapshot that is taken when a new interrupt materializes.

Now, the snapshot buffer can be made to behave like a register file in order to obtain the above-indicated functionality without requiring a change in the instruction set architecture (**ISA**) of the processor. However, the adding of the snapshot buffer to the register file address space of the processor implies that additional register addressing bits are required in the instruction encoding. Therefore, a method is needed to reduce or even fully eliminate the addressing overhead, by carefully implementing the snapshot buffer and incorporating this buffer in the processor architecture.

This particular problem has not been approached by WO02/33570. There, the saving of address bits has been attained by using serial ***scan chains.*** These serial scan chains would allow to shift snapshot data into or out of the snapshot buffer without requiring explicit addressing of register locations within the snapshot buffer. However, a distinct disadvantage of the use of scan chains is that much wiring is necessary to effectively constitute the chain from all of the various buffer flipflops. Finally, the shifting required to read data from or to write data into the snapshot buffer leads to unnecessary switching activity and thereby to increased power dissipation.

The inventor has recognized the advantageous feature of providing the interruptible data processor with a snapshot buffer composed of shadow flipflops. Each shadow flipflop has a corresponding normal flipflop in one of the resources of which the state must be saved and restored by the processor hardware before and after the interrupt handling, such in correspondence with the above cited reference.

Now, it is furthermore proposed to have the snapshot buffer behave like a ***stack-based*** register file that can be read or written by a standard load/store unit. Since the snapshot buffer behaves like a stack, no register index is required to address it. Furthermore, ***no shifting*** of snapshot data is required, as would have been the case with the scan chain based solution of the reference. Instead, a stack pointer is kept internally in the snapshot buffer. Reading from the snapshot buffer, to store a snapshot into background memory, pops the top of the stack and decrements the stack pointer value so that it will point to the previous top of the stack. Writing to the snapshot buffer, to reload a snapshot again from background memory, will push the new data onto the stack and increment the stack pointer so that it will point to the next top of the stack. Note that writing and reading in the snapshot buffer in this manner is only required when interrupts are actually nested. Otherwise, a conventional procedure would suffice.

### SUMMARY TO THE INVENTION

In consequence, amongst other things, it is an object of the present invention to allow the occurrence of multiple and nested interrupts by having a secondary data storage level care for the saving of all snapshots except for the most recent one.

Now therefore, according to one of its aspects the invention is characterized according to the characterizing part of Claim 1.

The invention also relates to a data processing facility with such data processor embedded, and to a method for operating a data processor arranged for handling nested interrupts in the above indicated manner. Further advantageous aspects of the invention are recited in dependent Claims.

### BRIEF DESCRIPTION OF THE DRAWING

These and further aspects and advantages of the invention will be discussed more in detail hereinafter with reference to the disclosure of preferred embodiments, and in particular with reference to the appended Figures that show:
Figure 1, a block diagram of a VLIW processor with a stack-based snapshot buffer;
Figure 2, a block diagram of a stack-based snapshot buffer;
Figure 3, a shadow flipflop interconnected to a normal resource flipflop.

### DETAILED DESCRIPTION OF PREFERRED EMBODIMENTS

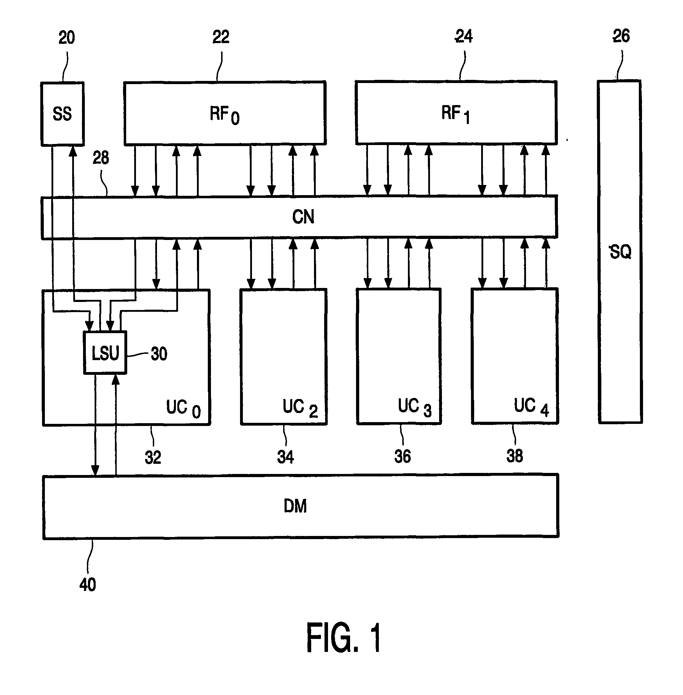

Figure 1 illustrates a block diagram embodiment of a VLIW processor with a stack-based snapshot buffer. In the Figure, the number of interconnections actally shown has been kept as low as possible for thereby getting a clear Figure whilst actually indicating only those interconnections that were considered necessary to explain the functioning of the structure. Now, the arrangement contains two register files **(RF₀, RF₁)** 22, 24, four issue slots **(UC₀, UC₁, UC₂, UC₃)** 32, 34, 36, 38, an interconnection network **(CN)** 28 interconnecting the register files to the issue slots, and a controller **(SQ)** 26. The first issue slot **(UC₀)** 32 is the only issue slot actually used during interrupt handling. During such interrupt handling, the various states of relevant resources, together with the relevant state of the sequencer will be copied into the shadow flipflops of the snapshot buffer **(SS)** 20. The latter is exclusively connected to a load/store unit **(LSU)** 30 located within **UC₀** 32 and operating as an additional register file to the above register files **RF₀** 22 and **RF₁** 24. Like any conventional load/store unit, the element **LSI** 30 has access to a background data memory **(DM)** 40 to therein store and therefrom load snapshot data in the case of handling nested interrupts.

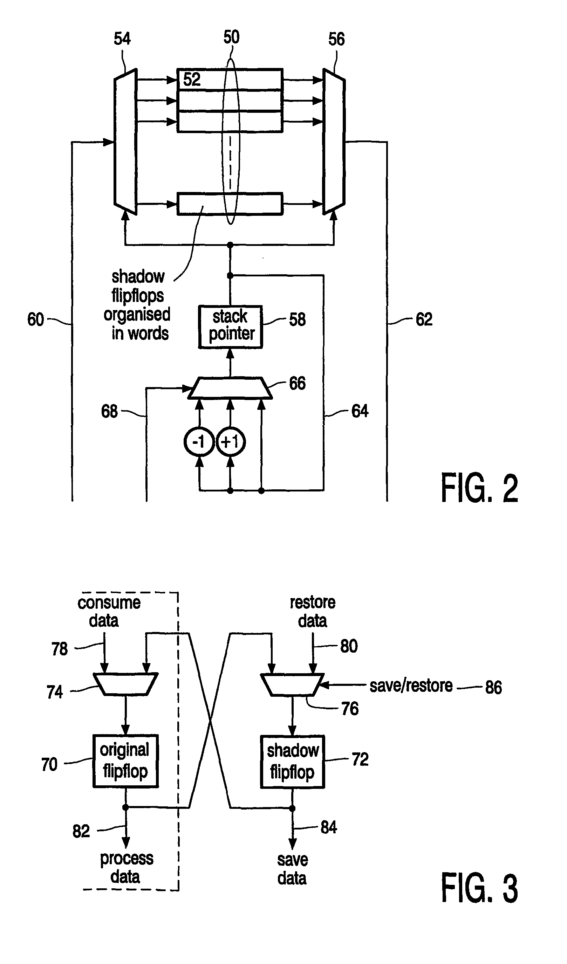

Figure 2 illustrates a block diagram of the internal arrangement of a stack-based snapshot buffer. The buffer is composed of a plurality of shadow flipflops not shown separately that have been organized in a set 50 of parallel words of which only word 52 has been indicated. Word length dimensioning is done according to need and available processor facilities such as data path width. Each shadow flipflop is connected to a corresponding state indicating flipflop that is located in a processor resource. During the handling of an interrupt, this state must be saved, cf. Figure 3 hereinafter. In the snapshot buffer, the inputs to the various shadow words are connected to a demultiplexor 54 for allowing at any time the writing of exactly one word. Likewise, in the snapshot buffer, the outputs from the various shadow words are fed to a multiplexor 56 for allowing at any time the reading of exactly one word.

Both the demultiplexor 54 and the multiplexor 56 are controlled by a stack pointer from a stack pointer register 58 that is located in the snapshot buffer as well. In fact, reading from the snapshot buffer on line 62 is only required at the start of a nested interrupt, and writing to the snapshot buffer from line 60 is only required at the end of a nested interrupt. Therefore, these two operations will never occur simultaneously and a single pointer register 58 could be sufficient to control the interleaved addressing of different words in the stack buffer. The pointer value is retrocoupled on line 62 to pointer update control 66 for subsequent reloading of pointer register 58. As shown, three-operation control line 68 will allow respective read, write, and no-operation modes with respect to the pointer value. The effective operations are executed in decrementing element **(-1),** incrementing element (+1), and no-operation element (through a straightaway retrocoupling).

Because in the embodiment the snapshot buffer will maintain its own internal stack pointer, none of the above read/write commands will require a register address, as would have been required for standard random access register files. Hence, no additional instruction bits will be required for addressing the registers in the snapshot buffer. Note that the actual ***value*** of the stack pointer is not related to the ***level*** of an interrupt, but instead to the sequence according to which for a particular interrupt the data will be written to the status registers. As soon as a subsequent interrupt will become manifest, the contents of the set of shadow registers will be written to the stack. As soon as the next interrupt arrives, the shadow registers are copied to DM 40, to make place for newer data.

Figure 3 illustrates a shadow flipflop 72 interconnected to a normal resource flipflop 70, cf the published reference Patent Application WO 02/33570 A2 cited supra. The interrupted line (a) at left delimits the standard operational hardware with standard or original flipflop 70 and input gate facility 74. The input gate facility 74 will receive consume data 78 and the flipflop 70 will output process data 82. The shadow flipflop 72 outputs save data on line 84. The shadow flipflop input is fed by save/store multiplexor 76 that is controlled by control signal 86. The two halves of the Figure are mutually cross-coupled as shown.

At the start of each interrupt handling, a complete snapshot is taken from the relevant processor state within a single clock cycle through instantly copying the value of each normal flipflop to its corresponding shadow flipflop. Similarly, at the end of each interrupt handling, the complete snapshot is restored from the snapshot buffer to the processor proper by instantly copying each shadow flipflop to its corresponding normal flipflop.

Before enabling the nesting of an interrupt, the contents of the snapshot buffer can be stored in data memory through using the load/store unit popping of snapshot data organized in words from the stack. This feature will then free the snapshot buffer to take a new snapshot at the start of the handling of each such nested interrupt. Upon return from a nested interrupt, after restoring the current snapshot buffer contents, the original snapshot data from an interrupted service routine can be loaded from data memory and be written to the snapshot buffer through using a load/store unit that pushes snapshot data organized in words onto the stack.

Low power can be obtained by deactivating the snapshot buffer as much as feasible. This is done in the following manner. All shadow flipflops in the snapshot buffer are only clocked during the actual taking of a snapshot, which may imply activating the snapshot buffer during only a single clock cycle. Furthermore, only the shadow flipflops pointed to by the stack pointer as the top-of-stack-plus-one are clocked during a stack push operation. Finally, the stack pointer itself is only clocked during stack pointer updates that are caused by the popping and pushing, respectively, of the snapshot buffer stack.

An advantageous field of application of the invention are embedded digital signal processors **(DSP).** The invention will be further applicable in various interruptible embedded processor architectures that employ scheduling based on **NUAL-EQ,** and that would therefore require pipeline snapshots instead of pipeline flushing. Specific fields of application would be video processing, video codecs, audio codecs, audio graphics, 3G telecom, Voice-over-packet, and many others.

## Claims

1. A data processor comprising one or more functional units, one or more register files (22, 24), a data memory (40), a load/store unit (30) and a snapshot buffer (20) with a plurality of shadow flipflops, which snapshot buffer during the handling of an interrupt condition accommodates to save state informations located in resource flipflops in respective shadow flipflops,
**characterized in that** the plurality of shadow flipflops is organized in a set of parallel shadow words, the inputs to the various shadow words being connected to a demultiplexer (54), the outputs from the various shadow words being coupled to a multiplexor (56) wherein the snap-shot buffer further comprises a stack-pointer register and wherein the multiplexer (56) and the demultiplexer (54) are controlled by a stack-pointer in the stack-pointer register and wherein the load/store unit (30) comprises controller means that upon a subsequent interrupt condition that occurs during the handling of an actual interrupt condition control the snapshot buffer to save the contents of said shadow words in a data memory facility having a multibit access port facility.

2. A data processor as claimed in Claim 1, wherein said controller means (30) are arranged for upon completing the handling of an actual interrupt condition retrieving the earlier saved contents of said snapshot buffer words from said data memory facility through said multibit access port facility back into said snapshot buffer words.

3. A data processor as claimed in Claim 2, wherein said controller means (30) are arranged for upon said retrieving likewise restoring earlier saved state informations of various resource flip-flops allowing said data processor to proceed with handling an earlier uncompleted interrupt, or, as the case may be to proceed with continuing a main thread of the processing.

4. A data processor as claimed in Claim 1, wherein said output multiplexer means (56) have said multibit access port facility for sequentially saving selected snapshot buffer words for transferring their contents to said data memory facility.

5. A data processor as claimed in Claim 1, wherein said input multiplexer means (54) having said multibit access port facility for sequentially selecting selected snapshot buffer elements for back-transferring their saved contents from said data memory facility.

6. A data processor as claimed in Claim 1, wherein the snapshot buffer (20) comprises a stack, and wherein a stack pointer is provided which points to the top of the stack, wherein one or more words of the stack comprise saved state information.

7. A data processor as claimed in claim 6, wherein write and read operations in said stack are executed at mutually exclusive instants in time.

8. A data processor as claimed in Claim 1, wherein said snapshot buffer (20) is operated at low power through one or more of clocking shadow flipflops only during actual taking of a snapshot, which implies activating the snapshot buffer during only one clock cycle, clocking only the shadow flipflops pointed to by the stack pointer as the top-of-stack-plus-one during a stack push operation, and clocking the stack pointer itself only during stack pointer updates that are caused by the popping and pushing, respectively, of the snapshot buffer stack.

9. A data processor as claimed in Claim 1, having a plurality of parallel issue slots (32-38) of which only a single issue slot is used for implementing such handling of nested interrupts.

10. A data processing facility comprising an embedded data processor as claimed in Claim 1.

11. A method for handling nested interrupts in a data processor comprising one or more functional units, one or more register files (22, 24), a data memory (40), a load/store unit (30) and a snapshot buffer (20) with a plurality of shadow flipflops, which snapshot buffer during the handling of an interrupt condition accommodates to save state informations located in resource flipflops in respective shadow flipflops, **characterized in that** the plurality of shadow flipflops is organized in a set of parallel shadow words, the inputs to the various shadow worlds being connected to a demultiplexer (54), the outputs from the various shadow words being coupled to a multiplexer (56) wherein the snap-shot buffer further comprises a stack-pointed register, and the load/store unit (30) comprises controller means, the data memory facility having a multibit access port facility and the method comprising controlling the multiplexer (56) and the demultiplexer (54) by a stack-pointer in the stack-pointer register and wherein the method further comprises that the controller means upon a subsequent interrupt condition that occurs during the handling of an actual interrupt condition control the snapshot buffer to save the contents of said shadow words in the data memory facility having a multibit access port facility.

## Patentansprüche

1. Ein Datenprozessor, umfassend eine oder mehrere funktionelle Einheiten, ein oder mehrere Registerfiles (22, 24), einen Datenspeicher (40), eine Lade/Speichereinheit (30) und einen Schnappschusspuffer (20) mit einer Vielzahl von Schattenflipflops, wobei der Schnappschusspuffer während der Verarbeitung eines Unterbrechungszustands aufnimmt, um Statusinformationen zu sichern, die in Betriebsflipflops in den jeweiligen Schattenflipflops lokalisiert sind,
**dadurch gekennzeichnet, dass** die Vielzahl von Schattenflipflops in einer Reihe von parallelen Schattenwörtern organisiert ist, wobei die Eingaben an die verschiedenen Schattenwörter mit einem Demultiplexer (54) verbunden sind, die Ausgaben aus den verschiedenen Schattenwörtern mit einem Multiplexer (56) gekoppelt sind, wobei der Schnappschusspuffer weiterhin ein Stapelregister umfasst und wobei der Multiplexer (56) und der Demultiplexer (54) durch einen Stapelzeiger in dem Stapelregister gesteuert werden und wobei die Lade/Speichereinheit (30) Kontrollermittel umfasst, die bei einem späteren Unterbrechungszustand, der während der Verarbeitung eines gegenwärtigen Unterbrechungszustandes auftritt, den Schnappschusspuffer steuern, um die Inhalte der Schattenwörter in einer Datenspeicheranlage mit einer Multibit-Zugriffs-Port-Anlage zu speichern.

2. Ein Datenprozessor nach Anspruch 1, wobei die Kontrollermittel (30) dazu angeordnet sind, bei Abschluss der Verarbeitung eines gegenwärtigen Unterbrechungszustands die früher gespeicherten Inhalte der Schnappschusspufferwörter aus der Datenspeicheranlage über die Multibit-Zugriffs-Port-Anlage wieder zurück in die Schnappschusspufferwörter zu erreichen.

3. Ein Datenprozessor nach Anspruch 2, wobei die Kontrollermittel (30) dazu angeordnet sind, beim Wiedererreichen gleichermaßen früher gespeicherte Statusinformationen der verschiedenen Betriebsflipflops wiederherzustellen, was es dem Datenprozessor erlaubt, mit der Verarbeitung einer früheren nicht abgeschlossenen Unterbrechung fortzufahren oder gegebenenfalls mit der Fortsetzung eines Hauptstrangs der Verarbeitung weiterzumachen.

4. Ein Datenprozessor nach Anspruch 1, wobei die Ausgabe-Multiplexermittel (56) die Multibit-Zugriffs-Port-Anlage zur sequenziellen Speicherung ausgewählter Schnappschußpufferwörter zur Rückübertragung ihrer Inhalte auf die Datenspeicheranlage aufweisen.

5. Ein Datenprozessor nach Anspruch 1, wobei die Eingabe-Multiplexermittel (54) die Multibit-Zugriffs-Port-Anlage zur sequenziellen Selektion ausgewählter Schnappschusspufferelemente zur Rückübertragung ihrer gespeicherten Inhalte aus der Datenspeicheranlage aufweisen.

6. Ein Datenprozessor nach Anspruch 1, wobei der Schnappschusspuffer (20) einen Stapel umfasst, und wobei ein Stapelzeiger vorgesehen ist, der auf die Spitze des Stapels zeigt, wobei ein oder mehrere Wörter des Stapels gespeicherte Statusinformation umfassen.

7. Ein Datenprozessor nach Anspruch 6, wobei Schreib- und Leseoperationen in dem Stapel zu sich gegenseitig auschließenden Zeitpunkten ausgeführt werden.

8. Ein Datenprozessor nach Anspruch 1, wobei der Schnappschusspuffer (20) bei niedriger Energie über einen oder mehrere von taktgebenden Schattenflipflops, nur während gerade ein Schnappschuss aufgenommen wird, betrieben wird, was die Aktivierung des Schnappschusspuffers während nur eines Taktzyklus, wobei nur die Schattenflipflops, auf die der Stapelzeiger als die obersten vom Stapel plus 1 während einer Stapel-Einspeicherungs-Operation zeigt, getaktet werden, und die Taktung des Stapelzeigers selbst nur während der Stapelzeiger-Aktualisierungen, die durch das Ausspeichern bzw. Einspeichern des Schnappschusspufferstapels verursacht werden, nahe legt.

9. Ein Datenprozessor nach Anspruch 1 mit einer Vielzahl von parallelen Befehlsausgabe-Slots (32-38) wovon nur ein einziger Befehlsausgabe-Slot zur Implementierung einer solchen Verarbeitung von geschachtelten Unterbrechungen verwendet wird.

10. Eine Datenverarbeitungsanlage umfassend einen eingebetteten Datenprozessor nach Anspruch 1.

11. Ein Verfahren zur Verarbeitung geschachtelter Unterbrechungen in einem Datenprozessor, umfassend eine oder mehrere funktionelle Einheiten, ein oder mehrere Registerfiles (22, 24), einen Datenspeicher (40), eine Lade/Speichereinheit (30) und einen Schnappschusspuffer (20) mit einer Vielzahl von Schattenflipflops, wobei der Schnappschusspuffer während der Verarbeitung eines Unterbrechungszustands aufnimmt, um Statusinformationen zu sichern, die in den Betriebsflipflops in den jeweiligen Schattenflipflops lokalisiert sind,
**dadurch gekennzeichnet, dass** die Vielzahl von Schattenflipflops in einer Reihe von parallelen Schattenwörtern organisiert ist, wobei die Eingaben an die verschiedenen Schattenwörter mit einem Demultiplexer (54) verbunden sind, die Ausgaben aus den verschiedenen Schattenwörtern mit einem Multiplexer (56) gekoppelt sind, wobei der Schnappschusspuffer weiterhin ein Stapelregister umfasst und wobei die Lade/Speichereinheit (30) Kontrollermittel umfasst, die Datenspeicheranlage eine Multibit-Zugriffs-Port-Anlage aufweist, und das Verfahren die Steuerung des Multiplexers (56) und des Demultiplexers (54) durch einen Stapelzeiger in dem Stapelregister umfasst und wobei das Verfahren weiterhin umfasst, dass die Kontrollermittel bei einem späteren Unterbrechungszustand, der während der Verarbeitung eines gegenwärtigen Unterbrechungszustandes auftritt, den Schnappschusspuffer steuern, um die Inhalte der Schattenwörter in der Datenspeicheranlage mit einer Multibit-Zugriffs-Port-Anlage zu speichern.

## Revendications

1. Processeur de données comprenant une ou plusieurs unités fonctionnelles, un ou plusieurs fichiers de registres (22, 24), une mémoire de données (40), une unité de chargement/stockage (30) et un tampon d'instantané (20) avec une pluralité de bascules miroir, lequel tampon d'instantanés, pendant la manipulation d'un état d'interruption, s'adapte pour sauvegarder des informations d'état situées dans des bascules de ressources dans des bascules miroirs respectives,
**caractérisé en ce que** la pluralité de bascules miroirs est organisée dans un ensemble de mots miroirs parallèles, les entrées dans les divers mots miroirs étant connectées à un démultiplexeur (51), les sorties des divers mots miroirs étant couplées à un multiplexeur (56), dans lequel le tampon d'instantané comprend en outre un registre d'indicateurs de pile et dans lequel le multiplexeur (56) et le démultiplexeur (54) sont commandés par un indicateur de pile du registre d'indicateurs de pile et dans lequel l'unité de chargement/stockage (30) comprend des moyens de commande qui, lors d'un état d'interruption suivant se produisant pendant la manipulation d'un état d'interruption réel, commandent le tampon d'instantané pour sauvegarder le contenu desdits mots miroirs dans une installation de mémoire de données ayant une installation de port d'accès à plusieurs bits.

2. Processeur de données selon la revendication 1, dans lequel lesdits moyens de commande (30) sont aménagés pour, à la fin de la manipulation d'un état d'interruption réel, récupérer le contenu sauvegardé plus tôt ou lesdits mots tampons d'instantanés de ladite installation de mémoire de données, via ladite installation de port d'accès à plusieurs bits, dans lesdits mots tampons d'instantanés.

3. Processeur de données selon la revendication 2, dans lequel lesdits moyens de commande (30) sont aménagés pour, lors de ladite récupération, restaurer de la même manière les informations d'état sauvegardées plus tôt de diverses bascules de ressources, permettant audit processeur de données de poursuivre la manipulation d'une interruption antérieure non terminée ou, le cas échéant, de poursuivre en continuant un fil principal du traitement.

4. Processeur de données selon la revendication 1, dans lequel lesdits moyens multiplexeurs de sortie (56) ont ladite installation de port d'accès à plusieurs bits pour sauvegarder de manière séquentielle des mots tampons d'instantanés choisis pour transférer leur contenu à ladite installation de mémoire de données.

5. Processeur de données selon la revendication 1, dans lequel lesdits moyens multiplexeurs d'entrée (54) ont ladite installation de port d'accès à plusieurs bits pour choisir de manière séquentielle les éléments tampons d'instantanés choisis pour re-transférer leur contenu sauvegardé de ladite installation de mémoire de données.

6. Processeur de données selon la revendication 1, dans lequel le tampon d'instantané (20) comprend une pile, dans lequel est prévu un indicateur de pile qui indique le sommet de la pile et dans lequel un ou plusieurs mots de la pile comprend ou comprennent des informations d'état sauvegardées.

7. Processeur de données selon la revendication 6, dans lequel des opérations d'écriture et de lecture dans ladite pile sont exécutées à des moments mutuellement exclusifs du temps.

8. Processeur de données selon la revendication 1, dans lequel ledit tampon d'instantané (20) est actionné à faible puissance via une bascule miroir de synchronisation ou plus uniquement pendant la prise réelle d'un instantané, ce qui implique l'activation du tampon d'instantané pendant un seul cycle d'horloge, la synchronisation uniquement des bascules miroirs indiquées par l'indicateur de pile comme le sommet de la pile plus un pendant une opération de poussée de pile, et la synchronisation de l'indicateur de pile lui-même uniquement pendant les mises à jour de l'indicateur de pile qui sont entraînées par le surgissement et la poussée, respectivement, de la pile tampon d'instantanés.

9. Processeur de données selon la revendication 1, ayant une pluralité de fentes de sortie parallèles (32 à 38) dont seule une fente de sortie est utilisée pour mettre en oeuvre cette manipulation d'interruptions imbriquées.

10. Installation de traitement de données comprenant un processeur de données noyées selon la revendication 1.

11. Procédé de manipulation d'interruptions imbriquées dans un processeur de données comprenant une ou plusieurs unités, un ou plusieurs fichiers de registres (22, 24), une mémoire de données (40), une unité de chargement/stockage (30) et un tampon d'instantané (20) avec une pluralité de bascules miroirs, lequel tampon d'instantané pendant la manipulation d'un état d'interruption s'adapte pour sauvegarder des informations d'état placées dans des bascules de ressources dans des bascules miroirs respectives, **caractérisé en ce que** la pluralité de bascules miroirs est organisée dans un ensemble de mots miroirs parallèles, les entrées des divers mots miroirs étant connectés à un démultiplexeur (54), les sorties des divers mots miroirs étant couplés à un multiplexeur (56), dans lequel le tampon d'instantané comprend en outre un registre d'indicateurs de pile et l'unité de chargement/stockage (30) comprend des moyens de commande, l'installation de mémoire de données ayant une installation de port d'accès à plusieurs bits et le procédé comprenant la commande du multiplexeur (56) et du démultiplexeur (54) par un sommet de pile ou dans le registre d'indicateurs de pile et dans lequel le procédé comprend en outre le fait que les moyens de commande, lors d'un état d'interruption suivant qui se produit pendant la manipulation d'un état d'interruption réel, commandent le tampon d'instantané pour sauvegarder le contenu desdits mots miroirs dans l'installation de mémoire de données ayant une installation de port d'accès à plusieurs bits.
